# EUROPEAN PATENT APPLICATION

(11) **EP 1 162 496 A1**
(43) Date of publication of application: **12.12.2001**
(21) Application number: 00900873.1
(22) Date of filing: 21.01.2000
(51) Int. Cl.: G02F 1/167, G02F 1/17, G02F 1/137

(54) **IMAGE RECORDING MEDIUM, IMAGE RECORDING/ERASING DEVICE, AND IMAGE RECORDING METHOD**

(30) Priority: 21.01.1999 JP 5129399
(71) Applicant: MIWA SCIENCE LABORATORY INC., Kawasaki-shi, Kanagawa 216-0033 (JP)
(72) Inventor: MIWA, Hirohide, Kawasaki-shi, Kanagawa 216-0033 (JP); MIWA, Hiroaki, Kawasaki-shi, Kanagawa 216-0033 (JP); KINO, Masato, Tokyo 158-0087 (JP)
(74) Representative: Hitching, Peter Matthew
(86) International application number: JP0000299
(87) International publication number: WO0043835

(57) **Abstract**

An image recording medium having a paper like feeling to the touch, and which is capable of recording and erasing repeatedly, is disclosed along with a recording and erasing apparatus and an image recording method therefor. The recording medium is made from a large number of fine coloring particles, which are responsive to an electromagnetic field, and a supporting medium in which the particles are dispersed and which is preferably non-fluid at room temperature and fluidic at higher temperatures. The particles are driven by the field within the fluidized supporting medium so as to rotate and/or move to form an image, and the formed image is frozen after being cooled to room temperature. The supporting medium may be whitened by a mixture of finer white particles. The coloring particles may include a photocell and a color filter, so as to generate a potential for the same color light as the colors which they are intended to display, and may be driven to rotate and/or move in the electromagnetic field. Thus, forming of images on a white background, wherein the particles have specified color types the same as the color light at which they are illuminated, can be realized.

## Description

### TECHNOLOGICAL FIELD

The present invention pertains to the field of image recording media, specifically characterized by a sheet having a paper-like feeling and being an electrically recordable and erasable medium, namely having a reusable feature, and to an apparatus for recording and erasing on the medium, as well as to a method for recording and erasing on the medium.

### BACKGROUND ART

Recently, in order to prevent the exhaustion of forest and wood resources due to mass consumption of paper, mass energy consumption for paper production, and environmental damage due to CO₂ generation by burning waste paper, an image recording medium of a paper-like sheet, which is electrically recordable and erasable, namely which is reusable, has been targeted for applications, wherein it is sufficient to reserve only an essential part recorded for reading certain contents, and it is not necessary to record the entire contents thereof, for example, such as future electronic newspapers which may be distributed by digital broadcast.

In order for such electronic newspapers to be used in an age of digital broadcast distribution, the aforesaid medium should be able to display a huge amount of information, including having a color capability, without being bound around such large apparatuses as currently existing display devices. It should also be able to keep an image in an unspoiled or undamaged condition, even after being taken out from the recording apparatus. Further, the medium should be wide enough to allow reading at a glance as well as selective reading. Furthermore, such a medium should have a paper-like feeling to the touch, and should be light and be capable of strongly withstanding folding and wrinkling.

Such image recording media have bee disclosed, which can display or erase desired characters, symbols or graphs by rotating or moving coloring particles with an externally applied electromagnetic field in a such sheet, such as a liquid medium dispersing said particles.

As one such example, an electrophoretic display apparatus is disclosed in Japanese Laid-Open Patent Publication No. 86116/64 Showa, and Japanese Laid-Open Patent Publication No. 149118/10 Heisei, wherein a pair of electrode plates, at least one side of which is transparent, is placed face to face at a small distance, and a medium dispersing microcapsules therein, including a dark color medium with dispersed bright color electrophoretic particles, is sealed between the plates. The disclosed technology can display a desired pattern by moving the electrophoretic color particles towards the transparent side as if they were absorbed thereby, in response to an applied electric field between the electrode plates. Also, this technology can erase the display by inverting the polarity of the applied field.

U.S. Patent No. 4,126,854 also disclosed a display system wherein ball shaped particles, with a half surface thereof being colored and electrically charged in a different way from the remaining half surface, are dispersed in a dielectric fluid, and the particles are rotated by an induced electric polarity caused from the different surface potential in response to an external electric field. Erasing of the display by inversely rotating the balls by an inverse external electric field is also disclosed.

However, the aforesaid disclosures have the following defects. It is necessary to keep an applied voltage for maintaining the display strictly as initially displayed, even at such severe conditions as wrinkling, because the dispersing media or the dielectric fluid is yet in a fluidic state. In the electrophoresis method, the dispersing medium must be darkly colored, because the particles are moved and adhered to an opposite side electrode to the transparent window electrode and must be concealed by the medium. Otherwise, the display may be unclear. Furthermore, there is no means to select a specific particle and rotate or move it, so it is difficult to extend the technology to a color display.

U.S. Patent No. 5,717,515 discloses a colorizing technology, wherein multicolor zones are provided on the surface of an electronically polarized ball, and the external electric field strength is controlled so as to twist the ball at a desired angle to display a specific color. However, this technology requires means and controls which are too complex.

### DISCLOSURE OF INVENTION

1. An object of the invention is to provide an image recording medium, having a paper like feeling to the touch, and being capable of maintaining the displayed image without impressing any electromagnetic field thereon after being taken out from the recording apparatus, and further allowing repeatable recording and erasing thereof.
2. Another object of the invention is to provide an image recording medium, the image of which is not degraded or partially lost by folding or wrinkling.
3. Another object of the invention is to provide an image recording and write-erasable reusable medium, in which a color display is realized by a simple process.
4. A further object of the invention is to provide an easy means to select and control a specific color particle from among coloring particles of plural colors by a means other than an electromagnetic field.
5. A final object of the invention is to provide an image recording medium capable of displaying a clear and sharp image.

A first aspect of this invention shall be discussed hereafter.

The recording medium of the present invention is composed of a base sheet, a transparent protective layer being spaced at a specific distance from the base sheet, and a recording layer sealed between the base sheet and the protective layer, the recording layer comprising coloring particles which are movable and/or rotatable or twistable by an external electromagnetic field and a dispersing medium to support the particles in position.

A first external electromagnetic field can easily move or twist the coloring particles inside the supporting medium and form a viewable image. And a second external electromagnetic field, which is inverse to the first one, can easily move or twist the coloring particles inversely in the supporting medium to erase the written image.

The aforesaid supporting medium is of a thermofluidizing material that is substantially non-liquid at room temperature and which becomes liquefied at a temperature elevated over a specific temperature. At the elevated temperature, the medium becomes a liquid and allows the particles to move or rotate therein to form an image by the externally applied first electromagnetic field. At a temperature lowered below the specific temperature, the medium becomes substantially non-liquid and holds the coloring particles in the formed image position. At the elevated temperature, the medium is again liquefied for allowing the particles to move or rotate by the externally applied second electromagnetic field, so that the image is erased, and then at the lowered temperature, the erased image is fixed in its erased state below the specific temperature.

The aforesaid coloring particles are, for example, particles having a half surface colored in a different color from the other half, namely having a color polarity, and consequently an electric polarity is obtained which causes moving or rotating in response to externally applied electromagnetic fields, wherein the axis of color and electric polarity coincide with each other.

Such a color polarity can be formed by coating about half or more of the surface of each particle with a color different from its remaining surface, wherein the difference can be of a reflection spectrum, transmission spectrum, photo polarization, and/or rotary polarization.

The different colors between the respective halves implies that there is a different material between the halves. Each color has a different surface potential, namely a zeta potential, so that the potential difference between the two halves causes an electromagnetic polarity, the polar axis of which coincides with one of the color's polarity. The electromagnetic polarity can be enhanced by thinly coating a layer of metal, metal oxide, metal sulfide, metal halide, pigment, organic material, etc, which is made thin so as not to spoil the color. For the particles made from insulating materials, a dielectrically induced polarization can be utilized.

The whole particle or part of the particle can be made of a magnetic substance so as to be moved or rotated by an external magnetic field.

For particles which are made of molecules, or coagulated molecules, such electromagnetic polarity can be realized by ionization, dissociation, or electron density distribution change.

In the first aspect of the present invention, the recording medium has a supporting medium made of a thermofluidizing material which is sealed between the base sheet and the protective layer. Therefore, the supporting medium never flows out even when liquefied at an elevated temperature, and allows the coloring particles dispersed in the liquefied medium to move and/or rotate by application of the first external electromagnetic field, thereby showing the desired colored surface to the transparent window side for viewing, and for forming an image such as characters, symbols, graphs, etc. in the recording layer.

Then, the medium is cooled below a certain temperature and becomes substantially solid or attains a state of high viscosity. As a result, the coloring particles are fixed by the non-liquid supporting medium and the image is held or frozen even if the external electromagnetic field is taken away. Since the particles are fixed by the non-liquid supporting medium, the displayed image is frozen and is never degraded or lost even if the recording medium is folded or wrinkled.

For erasing, a second external electromagnetic field is applied to move and/or rotate the coloring particles in an inverse way with their electromagnetic polarity so as to erase the image. When cooled below the certain temperature, the coloring particles become fixed in an erased state and the image, as erased, is frozen.

A second aspect of this invention shall be discussed hereafter.

According to the second aspect, instead of using a thermofluidizing material as in the supporting medium of the first aspect, the image recording medium is characterized by thermofluidizing units which are dispersed within a transparent and solid supporting medium. Such thermofluidizing units include coloring particles dispersed therein, and are substantially non-fluid at room temperature and become fluidized above a certain temperature, but wherein the certain temperature is below the melting point of the supporting medium. Since the supporting medium is solid even within the temperature range at which the thermofluidizing units are heated and fluidized, the base sheet or the protecting layer used in the first aspect is not always necessary.

Therefore, the image recording medium according to the second aspect can be used for writing an image and hold the written image, or erase and hold an erased condition, because the thermofluidizing units function in same way as the supporting medium in the first aspect.

In the image recording medium according to the first and second aspects, the thermofluidizing material may consist of a transparent supporting mother material having additional dispersed particles therein which are smaller than the coloring particles and which are made of a white light reflecting opaque or transparent body and/or a white light scattering body. In such a supporting medium, when the coloring particles are rotated and/or moved within the heated and fluidized thermofluidizing material, the coloring particles approaching the window side can be viewed, but particles which sink down more than the diameter of the coloring particles toward the opposite bottom side are concealed by the white reflected light and/or the white scattered light. Thereby, the image becomes clearer and its background can be made white.

The third aspect of the present invention discloses that the supporting medium is in a fluidic state at room temperature while also comprising a transparent mother material and white light reflecting opaque and/or or white light scattering particles that are smaller than the coloring particles, instead of using a thermofluidizing supporting medium as in the first aspect.

In such a supporting medium, the coloring particles which approach the window side can be viewed, however, particles which are sunken down more than a diameter of the coloring particles toward the opposite bottom side are concealed by white reflected light and/or white scattered light. Thereby, the image becomes clearer and its background can be made white.

In the image recording medium according to the aforesaid first to third aspects, each of the coloring particles can be provided with a photo-electromagnetic effect part, in which an electromagnetic effect is induced by light having a wavelength ranging from infrared to X-ray. Such electromagnetically activated coloring particles can be moved or rotated by an external electromagnetic field.

Such a photo-electromagnetic effect can be a photo-voltaic, photo- conductive, photo-ionizing, photo-dissociating or a photo-polarizing effect. For the photo-voltaic effect, a photo cell such as amorphous silicone is typical. For the photo-conductive effect, Se, Cd and certain organic materials used in photosensitive printing drums of photocopying devices are typical. Such photo-electromagnetic materials can be formed on the coloring particles by vacuum evaporation, ion spattering or by spraying means.

The aforesaid coloring particles having a photo-electromagnetic effect part can be used not only for black and white or monocolor image recording, but can also most effectively be used for color image recording, as described in the following. Provided that the coloring particles are of different plural colors such as red (R), green (G), blue (B) and black (K), each colored particle is arranged such that the photo-electromagnetic effect part provided on the particle can be activated by respective light wavelength ranges, which are different from each other, in the range of from infrared to X-ray. The aforesaid arrangement allows for selective activation of a specific color particle to be moved or rotated.

Accordingly, in the first to third aspects of the present invention, a color display can be realized with the coloring particles, each having a photo-electromagnetically active part on its surface activated by a specific light wavelength range, different from the other color, simply by being illuminated at the specific wavelength. Hereby, if the coloring particles are composed of Red, Green and Blue, namely, the additive three primary colors, and if they are made so as to be activated by the same color light of their own presenting color, it is possible to selectively activate desired color particles by the same color light and to move and/or rotate them to make a color image.

The coloring particles can have respective color filters so as to pass its own specific wavelength of light selectively to the photo-electromagnetically active part on the surface thereof. Thus, the coloring particles can be activated selectively by filtering specific wavelengths of light corresponding to their own colors. Furthermore, it is desirable that the filter is arranged to pass a wavelength which is the same as the color presented by the particle.

In the first to third aspects of the invention, for a display such as dot gradation printing (i.e., where a halftone is digitized and converted to density of dots), then a black color must be added to the additive three primary colors. For such visually black coloring particles, a filter passing infrared light can be used.

In the first and second aspects of the present invention, when the coloring particles are composed of plural different color types, the thermofluidizing material can be a material which is transparent at room temperature, but having a whitening temperature below its melting point, becoming a whitened solid when cooled to room temperature after having once been raised to the whitening temperature, and wherein the material remains transparent when cooled to room temperature after being made transparent at a temperature higher than its melting point. As such materials, the following have been disclosed: Japanese Laid-Open Patent Publication No. 154198/55 Showa, and U.S. Patent No. 4,268,413 disclose such materials as a matrix such as a polyester, polyvinyl chloride, co-polymer of vinyl chloride-vinyl acetate, and vinyl acetate compounds, having dispersed low molecular weight organics therein such as higher fatty acid, alkanol, alkylamine, alkane, alkene and alkyne. Japanese Laid-Open Patent Publication No. 281162/7 Heisei also discloses such a matrix of a high molecular weight as PVA, having a smectic liquid crystal dispersed therewith.

The thermofluidizing material becomes transparent at an erasing temperature above its melting point, so that the coloring particles can be illuminated by the aforementioned light and the particles corresponding to the specified light wavelength range can be selectively electromagnetically activated in response to the external electromagnetic field, and rotated and/or moved to form an image. Then, cooling to room temperature solidifies or freezes the image.

The thermofluidizing material can be whitened by elevating the processed medium to a whitening temperature and cooling it down to room temperature. Then, the coloring particles moved near to the surface can be viewed by the eyes, but the remaining particles near to the bottom and left unmoved are concealed by the whitened medium. As the result, the image can be contrasted clearly on a white background.

Furthermore, in the thermofluidizing materials according to the first and second aspects, and in the supporting materials according to the third aspect, color selection can be accomplished by adjusting the material viscosity so as to disallow the particles to move or rotate solely under an electromagnetic field, but to allow them to move or rotate if an oscillatory vibration resonant to the coloring particles is applied in addition to the electromagnetic field. Particles which are resonant to a specified frequency can acquire energy to move or rotate in the viscous material and thereby form an image.

The coloring particles, even in a monocolor case as indicated in former aspects, can of course move and/or rotate more quickly when a mechanical vibration is impressed thereon. However, when the coloring particles are of plural colors, and one of the respective colors has a specific resonant frequency responsive to mechanical vibration, then the application of a specific vibration at the resonant frequency can select the specific color and thereby move and/or rotate selected particles.

Accordingly, if the coloring particles are provided so as to have a specific mechanical vibration resonance frequency respectively for their colors, the image recording medium shown in the first to third aspects can provide a color image display by applying a specific vibration frequency corresponding to a desired color.

The coloring particles are provided with different mechanical resonant frequencies respectively according to their presenting colors by assigning different sizes, weights or apparent densities. Vibration can be applied thereto by a high frequency electromagnetic field or by ultrasound.

In a forth aspect of the present invention, an image recording medium is disclosed which is provided with a photo polarization layer instead of the protective layer, and a thermotropic liquid crystal is used as the supporting medium itself of the recording medium. The thermotropic liquid crystal becomes liquid at an elevated temperature and performs as a liquid crystal. An example of such a thermotropic liquid crystal is benzoic-cholesteril.

In the forth aspect of the image recording medium, the thermotropic liquid crystal supporting medium functions as a liquid crystal at an elevated temperature, and exhibits an orientation according to an applied electric field. Thus, the oriented liquid crystal molecules are viewed as coloring particles through a polarization plate.

Then, the thermotropic liquid crystal is brought to room temperature and becomes substantially in a non-fluidic state. Thereby, the oriented molecules are frozen in an oriented state. Namely, the oriented molecules are fixed by the solidified thermotropic liquid crystal. Thus, the image recording medium according to the forth aspect can maintain the displayed image even after the electric field has been removed.

The thermotropic liquid crystal can be brought to a liquid state at an elevated temperature and the image can be erased by removing the electric field, or in other words, by releasing the orientation.

The fifth aspect of the present invention discloses an image recording medium, being provided with a magnetic layer in place of the base sheet, wherein a supporting medium is sealed between the magnetic layer and the protective layer, and coloring particles are dispersed in the supporting medium.

The coloring particles are tailored so as to be magnetized in a magnetic field and lose magnetization at removal of the magnetic field. Such coloring particles can be of soft ferrite or pure iron particles.

According to the fifth aspect, at an elevated temperature of the supporting medium, the coloring particles are magnetized and moved by a first magnetic field in the liquefied supporting medium thereby forming an image corresponding to the magnetized pattern of the magnetic layer.

In the fifth aspect, the supporting medium plays the same role as in the first aspect, namely maintaining the image, erasing it, and maintaining the image in an erased state.

Hereafter, the image recording and erasing apparatus is an apparatus for recording or erasing the image recording medium which is composed of a base sheet or a magnetic layer, a protective layer or a photo-polarizing layer facing the base sheet or the magnetic layer at a specific distance, a membrane-like recording layer consisting of a supporting layer which is substantially non-liquid at room temperature and which become fluid above certain temperature, and coloring particles which are dispersed in the supporting layer and which become oriented, move and/or rotate in response to the electromagnetic field.

The apparatus further has a heating means for heating above a certain temperature, means for applying an electromagnetic field for orienting, moving and/or rotating the coloring particles for forming or erasing an image, and a cooling means for cooling below a certain temperature for congealing the image, or the erased state, as it is.

The first aspect of the image recording and erasing apparatus relates to the image recording medium disclosed in the first, forth, and fifth aspects, namely, a case in which the recording medium is interposed between the base sheet and protecting layer relates to the first aspect, a case in which the recording medium is interposed between the base sheet and a photo-polarization sheet relates to the third aspect, and a case in which the recording medium is interposed between a magnetic sheet and the protective layer sheet relates to the fifth aspect.

In the first aspect of the image recording and erasing apparatus, the thermofluidizing material or a thermotropic liquid crystal is brought into a fluidic state by the heating means, wherein the coloring particles become ready to be oriented, moved and/or rotated.

Next, an electromagnetic field is applied, by the aforesaid means for applying an electromagnetic field, to the coloring particles for moving and/or rotating them within the supporting medium, or orienting them in the liquefied liquid crystal medium, to thereby form an image. An inverse field is applied again by the electromagnetic field applying means which causes the coloring particles to be oriented, moved and/or rotated in an inverse direction so that the image is erased.

The image recording medium is also cooled by the cooling means to attain a non-fluid state. Then the imaged or the erased medium is frozen and the coloring particles are fixed in place.

The second aspect of the image recording and erasing apparatus relates to the second aspect of the image recording medium. Except that the target object of heating, applying an electromagnetic field, and cooling is the thermofluidizing material unit, instead of the material according to the first aspect, the other features thereof are essentially the same as in the first aspect.

In the first and second aspects of image recording and erasing apparatus, if the coloring particles have a photo-electromagnetic effect part, wherein a photo-electromagnetic effect is induced by irradiating a certain wavelength range of light from between infrared to X-ray, a light irradiation means is also provided. The light irradiation means activates the coloring particles to be electromagnetically active by irradiating them with light.

The vibration applying means is provided to move the coloring particles, which have a mechanical vibration resonant frequency, by applying the same resonant frequency vibration thereto, together with adjusting the viscosity of the thermofluidizing material in the dispersed units or in the supporting medium, so as to be hardly movable by solely an electromagnetic field. The vibration applying means can bring the particles into mechanical resonant vibration by using mechanical transmission or electrical interaction between an electro-mechanical active part and the applied electromagnetic field, and thereby can deliver energy to overcome the viscosity and move and/or rotate the particles in the thermofluidizing material.

The first aspect of the image recording method of the invention can be applied to the first or second aspect of the image recording medium, wherein the coloring particles are provided with a certain photo-electromagnetic effect part that is sensitive to light of a certain wavelength range between infrared and X-ray. Also, the first aspect is characterized by addressing an image dot at any desired region, by applying one of heat, an electromagnetic field, and light, while the other two are preliminary applied.

If the coloring particles are provided with a certain photo-electromagnetic sensitive part, then the coloring particles are electromagnetically activated by irradiation of light, and are moved and/or rotated in response to the applied electromagnetic field within the fluidized thermofluidizing material which is filled inside the supporting medium of the first aspect of the image recording medium, or inside the dispersed units of the supporting medium of the second aspect of the image recording medium. Accordingly, when any two items of the three items of heat, electromagnetic field and light are preliminary provided, the remaining item can be used for moving and/or rotating the particles addressed at a desired position to thereby form an image.

The second aspect of the image recording means of the present invention relates to the first and second aspects of the image recording medium, and is applied to a case in which the coloring particles have a certain photo-electromagnetic effect part that is sensitive to light of a certain wavelength range between infrared and X-ray, and further wherein the coloring particles are composed of plural color types having respective presenting colors which are almost the same light color at which they are activated. By providing preliminary heating with the heating means, applying an electromagnetic field with the electromagnetic field applying means, and finally projecting a color photo image to a desired region of the image recording medium, a color image corresponding to the projected image can be formed as a specific feature of this aspect of the invention. Black color displaying particles can preferably be made sensitive to infrared light.

According to the present image recording method, when the color image is projected, each color component of light is projected onto a region of the recording medium, wherein heat and an electromagnetic field have been applied together previously by the aforesaid means. The respective color particles, corresponding to each color component, are activated by respective components of the projected light and are moved and/or rotated to form a color image corresponding to the projected image.

### BRIEF DESCRIPTION OF THE DRAWINGS

Fig. 1 is an illustrative cross-sectional view, explaining a construction of an image recording medium according to a first embodiment.
Fig. 2 is an illustrative cross-sectional view, showing the image recording and erasing apparatus for the image recording medium shown in Fig. 1.
Fig. 3 is an illustrative cross-sectional view, showing a modified image recording medium, and the image recording and erasing apparatus for such a modified image recording medium, as explained in the first embodiment.
Fig. 4 is an illustrative cross-sectional view, showing another modified image recording medium, and the image recording and erasing apparatus for such an image recording medium, as explained in the first embodiment.
Fig. 5 is an illustrative cross-sectional view, showing an example of a coloring particle construction used in the image recording medium shown in Fig. 4.
Fig. 6 is a graph showing characteristics of a photo-voltaic cell.
Fig. 7 is an illustrative cross-sectional view, showing a further modified example of the image recording medium of the first embodiment, and the image recording and erasing apparatus for this medium.
Fig. 8 is an illustrative cross-sectional view, showing a construction of the image recording medium of the second embodiment.
Fig. 9(a) is an illustrative cross-sectional view, showing a modified example of the image recording medium of the second embodiment.
Fig. 9(b) is an illustrative cross-sectional view, showing an erased state of the image recording medium shown in Fig. 9(a).
Fig. 9(c) is an illustrative cross-sectional view, showing a displayed state of the image recording medium shown in Fig. 9(a).
Fig. 10(a) is an illustrative cross-sectional view, showing a construction of the image recording medium of the fourth embodiment.
Fig. 10(b) is an illustrative cross-sectional view, showing a displayed state of the image recording medium shown in Fig. 10(a).
Fig. 10(c) is an illustrative cross-sectional view, showing a frozen state of the displayed image of the image recording medium shown in Fig. 10(a).
Fig. 11(a) is an illustrative cross-sectional view, showing a construction of the image recording medium of the fifth embodiment.
Fig. 11(b) is an illustrative cross-sectional view, showing a displayed state of the image recording medium shown in Fig. 11(a).
Fig. 11(c) is an illustrative cross-sectional view, showing an erased state of the image recording medium shown in Fig. 11(a).

### PREFERED EMBODIMENTS OF THE PRESENT INVENTION

Further detailed explanations of the embodiments of the present invention shall be given while referring to the attached figures.

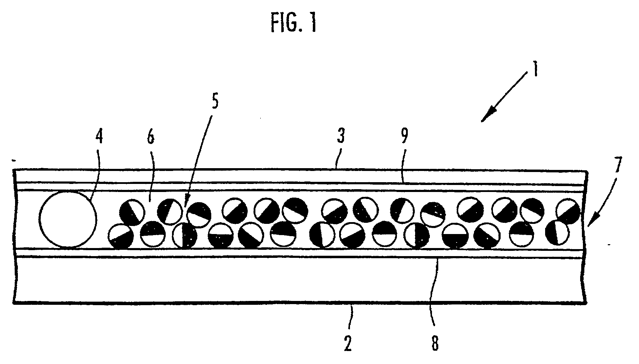

The first embodiment will be explained at first with Fig. 1.

The image recording medium of this embodiment is composed of a base sheet 2 and a transparent protective layer 3 facing each other, being separated by spacers 4, and a membrane-like recording layer 7 consisting of coloring particles 5 and a supporting material 6 dispersing the particles 5. The base sheet 2 has an electrically conductive layer 8 on the recording layer side, and the protective layer 3 has an electrically conductive layer 9 on the recording layer 7 side thereof. The recording layer 7 is sealed between the base sheet 2 and the protective layer 3 using a sealing material not shown in the figure, but which is provided at the end of the recording medium 1.

The base sheet 2 can be made of paper, plastic sheet, plastic film, or metal foil. Plastics for the sheet film can be one of polysulfon, polyimid, polyamid, polyalamid, polyparapanacid, cellurosediacetate, cellurosetri acetate, polypropylene, polyester, polyethylene terephtalate, polyethylene naphtalate, and polycarbonate, etc.

When the base sheet 2 is paper-based, it is preferable for the sheet to have an undercoat layer, impregnated into the paper, and functioning as an anchor, for enhancing surface smoothness and increasing the adhesion strength of the recording layer 7. The undercoat layer can be made, for example, by coating a toluene solution of polyester and isocyanate, etc. Such solution can also include an adhering agent.

The protective layer 3 can be made from an ultraviolet curable resin, an electron beam curable resin, or a thermally curable resin, etc. In the case of an ultraviolet curable resin or an electron beam curable resin, the following are known: Aqueous emulsions mainly consisting of the acrylate family, oligomers such as polyurethane acrylate family oligomers, polyester family origomers, epoxiacrylate family origomers, siliconeresin acrylate family oligomers, and cation polymerization family photocuring epoxiresine.

The protective layer 3 can be improved in lubricity, anti-fixation, or anti-adhesion with respect to the writing devices, by adding agents such as silicone oil, silicone modified resin, melamine resin, fluororesin oil, fluororesin fine particles, and calcium carbonate fine particles.

Each of the coloring particles is a sphere-like particle or ball, more than half the surface 5a of which is colored, for example, in black and the rest is colored in white as a background color. The coloring particles have an induced electromagnetic polarity, as the zeta potential, wherein the polarity of the black part and white part are different due to their different coloring materials.

In Fig. 1, the coloring particles 5 are all of a mono black color, but such particles can be of plural colors such as red, green, blue and black. The coloring particles can be made of commercially available glass, hollow silica, ceramics, various plastics, hollow plastics, etc., the diameter of which should be of from 5 to 100 µm.

Such small balls can be found in the marketplace, as spacers used in liquid crystal displays, toners used in various copy machines or laser printers, powder medicine with cover layer for controlling dissolving time, microcapsules, and even uniform size balls are currently commercially available.

The coloring particles are made white in a first step by mixing a white filler to the original material or by painting the surface thereof during free drop by spraying or electrostatic painting. Next, a coloring process of half its surface or more, as an example, is shown as follows.

The balls are scattered onto an adhesive material coated belt in such a high density as to fully cover the belt surface. Then, excess balls are removed by gravity or air-blowing so that a single layer of balls remains adhered to the belt. The upper half of the adhered balls is painted by spraying or electrostatic painting while the belt is moving. After surface painting is completed, the balls are removed from the belt. Thus, balls are obtained in which a half or greater surface part thereof is painted in a different color.

If exact half surface coloring is required, the following procedure provides one example. The belt is coated with molten wax or vacuum oil in an exact thickness of a half diameter of the balls. White balls born in a high speed air flow are impacted onto the belt having molten wax or oil thereon, and are caught on the surface reaching to the bottom. Then, the exposed upper surfaces are painted in the same way as explained above. Finally, the balls are removed from the belt surface and washed free of wax or oil, and the desired coloring balls are obtained.

The supporting material 6 is of thermofluidizing material which is solid at room temperature and becomes molten at a certain temperature, namely its melting point, and becomes fluidic over its melting point. The supporting material 6 must function to fix the coloring balls in a displayed or an erased position, and thus its melting point preferably is more than 120 □C in order to withstand an environment such as the interior of a car in summer.

Examples of such thermofluidizing materials having melting points exceeding 120 □C are, for example, thermoplastic resins, paraffin wax, haze wax, bees wax, fish wax, coconut oil, animal fat, ethylene wax, polytetrafluoro wax, calnauba wax, microcrystalline wax, amid stearate, and metallic stearates. The aforesaid thermoplastic resins could be polyester, polyamid, polyacrylate, polymeta-acrylate, polyurethane, polyvinylalchohol, polyorefin, polyvinylchloride, a vinylchloride-vinylacetate copolymer, a vinylchloride-vinylacetate-vinylalchohol copolymer, an ethylenevinylacetate copolymer, vinylidenechloride, polyethleneterephthalate, polyethylenenaphthalate, polycarbonate, silicone, and their modified, co-polymerized and/or mixed materials thereof.

The electrically conductive layer 8 formed on the recording layer side surface of the base sheet 2 provides a basic reference potential when an electromagnetic field is applied to the recording medium 1. The layer 8 can be made from spattered metal, indium-tin oxide (ITO), tin oxide which can be processed to become conductive by ultraviolet irradiation, titan oxide, and a static charge eliminator providing weak conductivity. Further, the conductive layer 9 formed on the recording layer side surface of the protective layer 3 must be transparent together with the protective layer 3 itself, so the aforesaid ITO is suitable.

The image recording medium 1 can be manufactured as follows.

As a first step, the conductive layer 8 is formed on the base sheet 2 by evaporating metal or ITO, irradiating ultraviolet light onto a tin oxide pre-compound coated surface, or by coating a week static charge eliminator. In the case of coating a static charge eliminator, dipping of the base sheet into a liquid static charge eliminator would be another choice.

As the second step, a recording layer 7 is coated on the conductive layer 8 of the base sheet 2. The recording layer 7 itself is made by mixing the coloring balls or particles with liquefied supporting materials at an elevated temperature above the melting point thereof, or by mixing the coloring balls with the liquefied supporting materials dissolved in an organic solvent and thereafter evaporating the organic solvent after mixing, and the recording layer is then adjusted to acquire a creamy state by heating or adding a solvent before coating is performed.

When forming a black and white image recording layer 7, the ball density should preferably be equivalent to two or three layers in a sedimentary state, so as to cover any unfilled positions of the first layer by a second layer of balls. Thus, the ball density is preferably made a little thinner than the maximum possible density. For example, assuming a ball diameter of 50 µm, the thickness of the recording medium should be about 70 to 150 µm.

In a third step, a transparent and conductive layer 9 is formed on the recording layer 7, for example, by evaporating ITO.

In a forth step, a transparent protective layer 3 is formed by coating a material thereon, using an ultraviolet curable material, electron beam curable material, or thermally curable material, and processing the same using respective curing means.

Finally, the edges are sealed with a non-illustrated sealing material and the image recording medium is completed.

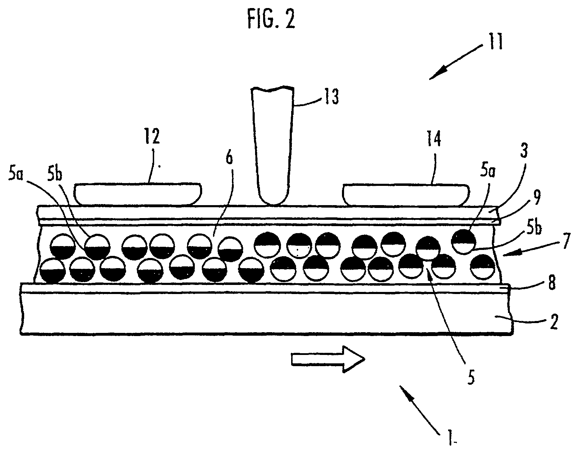

Means for recording or erasing the recording medium shall now be described hereafter. Fig. 2 shows an apparatus 11 which records an image on the recording medium 1 as well as erases the written image. In the apparatus 11, the direction of transportation of the recording medium is shown by the large white arrow. An electrode 12 serves both as a heating device and an electromagnetic field applying device for erasing, and an electrode 13 serves as an electromagnetic field applying device for writing or imaging. A cooling plate 14 is also provided serving as a cooling device.

The recording medium 1 is fed from an upper stream of flow in the apparatus 11, as shown in Fig. 2, in the direction of the arrow, and the supporting medium 6, consisting of a thermofluidizing material, is heated to attain a fluidic state by the heated electrode 12, whereby the coloring particles or balls become rotatable. At the same time, an erasing field is also applied using the same electrode 12.

Each ball has a black half 5a and a white half 5b. Each half has a respective zeta potential characterized by the constituent material of the color, and the difference in zeta potential rotates the balls so that the white part 5b turns upward and black part 5a turns downward, in response to the applied field by the electrode 12, so that the imaging medium attains an erased state.

Next, the image recording medium 1 proceeds to the electrode or stylus 13 for maintaining the thermofluidizing material in a heated and fluidized state, wherein a field for generating an image also is applied. Consequently, the coloring particles or balls turn so that the black part 5a rotates upwardly and white part 5b rotates downward as a result of interaction between the zeta potential difference of both poles and the electric field applied by the electrode 13. Then, an image such as characters, symbols and/or graphs is generated by the upwardly turned black balls, as the stylus 13 is scanned along the width, laterally and along the length dimension, longitudinally to the paper.

Next, the imaging medium 1 proceeds to a cooling plate 14 and the thermofluidizing material is cooled to room temperature and solidified. The rotated balls are thereby also fixed in the solidified thermofluidizing medium as they are oriented under the electrode 13, and hence the image can be maintained against folding or wrinkling. In Fig. 2, the balls under the cooling plate 14 are occasionally in line along the paper length and have the black face thereof upward, but the other parallel lines adjacent to the shown line under the stylus 13 have a white face upward, as erased, if no more stylus exists laterally and thus compose a white background of the image.

The image recording medium 1 is composed of the aforesaid materials, and therefore, it is flexible and never loses image quality due to folding or wrinkling of the medium.

For erasing an image in the image recording medium 1, an electric field is not applied by the electrode 13, and the same field for erasing by the electrode 12 is applied. Another arrangement may be suggested in which the plate 12 functions only for heating and the electrode 13 can be driven in such a way as to either write or erase by inverting the field polarity thereof.

Usually, in the image recording and erasing apparatus 11 shown in Fig. 2, the recording medium 1 is fed along its length direction (i.e., longitudinally) and the stylus 13 is mechanically driven across the sheet (i.e., laterally) to thereby generate an image two dimensionally, such as characters, symbols and graphs. The stylus can also be replaced by multi-pin or multi-stylus electrodes arranged in line.

The electrode 13 can be replaced by a small multi-stylus device arranged in line along the sheet length direction (hereafter referred to as the longitudinal direction), having a length covering the character height, so that a single scan can create one line of characters or a band of a graphic image.

The heating device or thermal head 13 may be a device capable of dot heating by application of small current thereto, such as a conventionally used thermal printing head, and can be used in place of the stylus electrode 13. In this case, the medium 1 should be cooled somewhat after being erased during the heating stage 12, by a non-illustrated cooling device (for example, by contact or air flow) to an appropriate temperature just below the fluidizing point. Then, the medium 1 is transported under the thermal head 13 while the conductive layer 11 applies a constant electric field and while spot or dot heating is applied by the thermal head to generate a dot image.

A laser beam can be used for heating instead of the thermal head. In this case, an addressing means such as found in currently known laser printers can be used.

In the case of laser beam heating, non-contact remote heating is possible. Thus, a charging means, such as a corona discharge device known in conventional laser printers, can be used instead of the conductive layer 9 or 8 for writing and erasing.

If the coloring particles in the image recording medium 1 are made of a magnetic material, or a part of their body or surface is made of a magnetic material, then the colored and white parts can be magnetized differently to form a magnetic polarity (i.e., dipole) or a magnetic moment.

In the above case, a magnetic head, such as currently used with magnetic tapes or cards, can be substituted for the electrode 13, and a permanent magnet may be arranged in place of the electrode 12 for erasing, namely, to turn the coloring particles or balls to display the white parts thereof upwardly.

In the image recording and erasing apparatus 11 having the aforesaid construction, the coloring balls are turned to show the white part thereof upwards by the magnetic field applied by the electrode 12, while the supporting material also is heated and fluidized by the electrode 12 and the image attains an erased state. Next, the image recording medium 1 proceeds to a region of the magnetic head, while remaining in a heated and fluidized state, wherein the activated head element rotates the balls so that the colored parts thereof are displayed upwardly, and hence a desired image is displayed. As the next step, the medium 1 proceeds to a cooling region, namely to a position underneath the cooling plate 14, and the supporting medium 6 is cooled to room temperature and solidified. Then, the coloring balls are fixed in place and consequently the image itself is fixed.

Assuming the thermal head is used in combination with the magnetic means, the magnetic electrode 13 can be aerial, wherein its longitudinal length preferably covers the characters' height and it is laterally long enough to cover the width of the medium 1. The thickness of the thermal head, which is to be inserted between the electrode 13 and the medium 1, must be thin enough so as to save the loss due to the air gap. If a laser beam is used as the heating means, then an optical arrangement to minimize the air gap must also be considered. Providing a narrow slit laterally across the magnetic electrode 13, and introducing the laser beam through the slit, is one possible solution.

The time needed to record on the image recording medium 1 is determined by the time required for rotating the coloring particles or balls. In order to shorten the rotation time, reducing the viscosity of the supporting medium 6 is important. Various means, such as superposing a small high frequency onto the writing field, or applying a higher field at the start of rotation than a following quasi-constant rotation period, can be used. In the case that a laser beam is used in place of the electrode 13, pre-heating of the medium just below the melting point, or use of a higher power beam, can shorten the recording time.

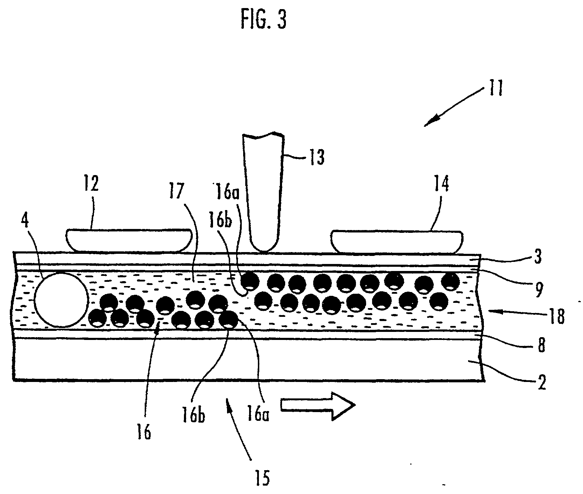

Referring to Fig. 3, an image recording medium 15 which is a modified example of the recording medium shown in Fig. 1 shall be described.

In the image recording medium 15 shown in Fig. 3, a white muddy recording layer 17, containing coloring particles or balls of a single color, and a white muddy medium supporting the balls therein, are new but the rest of its structure is the same as that of Fig. 1.

The white muddy supporting medium is solid at room temperature and melts above certain temperature to become fluidic. The coloring balls 16 can move in the molten white muddy medium 17 in a direction of its thickness so as to display or erase an image.

The coloring particles or balls 16 can be made from the same materials as the ones previously designated by reference numeral 5, and the colored parts thereof can occupy all or most of the surface, although it is preferable that the opposite pole has a white part remaining thereon. The purpose is to have a reference voltage when the electric polarity depends on the surface potential. The electric or magnetic polarity is stable for the case of existing charges or magnetons of both signs, except in extreme cases such as an electret.

The density at which the coloring particles 16 are dispersed is preferably half the density of the previously described coloring particles 5, for example, the thickness of the recording layer is set from 150 to 200 µm when the diameter of the balls is assumed to be 50 µm.

The white muddy supporting medium 17 should have a grade of muddiness which enables the balls moved toward the surface to be viewable, but wherein balls remaining deeper by a diameter of the ball or more cannot be viewed. For such a white muddy medium 17, the aforesaid supporting medium 6 having particles dispersed therein which are smaller than the coloring balls 16, and which is opaque or transparent but reflects white color and/or scatters white color may be used (both such types of smaller particles are not shown in Fig. 3).

Opaque particles for reflecting white color can be fine particles of TiO₂, ZnO, CaCO₃, etc., and particles for scattering white color can be fine particles of acrylresin, high refractivity resins used for plastic lenses, fine particles of liquid or bubbles.

The image recording medium 15 can be written on or erased by the image recording and erasing apparatus 11 shown in Fig. 3, which has same construction as the apparatus 11 shown in Fig. 2.

The recording medium 15 is fed from an upstream part of the apparatus 11, as shown in Fig. 3, in the direction of the arrow, and the white muddy supporting medium 17 consisting of a thermofluidizing material is heated to attain a fluidic state by the heating electrode 12, whereby the coloring particles or balls 16 become movable.

In the image recording medium 15, an electric field for erasing an image is applied, and the coloring balls 16 move toward the base sheet side inside the white muddy medium 17, as a result of interaction of the zeta potential with the applied electric field, and are concealed behind the white mud inside the supporting medium. Thus, any previous image is erased.

Then, the image recording medium 15 proceeds to a position under the electrode or stylus 13, where an electric field for writing the image is applied. Consequently, the coloring balls 16 move within the white muddy medium 17 toward the protective layer 3 and become viewable from the protective layer side, thereby forming an image such as characters, symbols, or graphs, as desired.

Next, the image recording medium 15 proceeds under the cooling plate 14, where the white muddy supporting medium 17 made of the thermofluidizing material is cooled to room temperature. The white muddy supporting medium 17 becomes solid and thereby fixes the coloring balls 16 either on the protective layer side or the base sheet side, and the image is frozen. In Fig. 3, all of the coloring balls 16 under the cooling plate 14 are shown as moved to the protective layer side, but other balls not relating to an image may be left on the base sheet side where they concealed by the white muddy medium.

The image recording medium 15 is flexible as it is made of the materials, so that the display of the image is not degraded or lost even if it is bent, folded, or wrinkled.

In the image recording medium 15, erasing can be performed by the image recording and erasing apparatus 11 in essentially the same way as for the image recording medium 1.

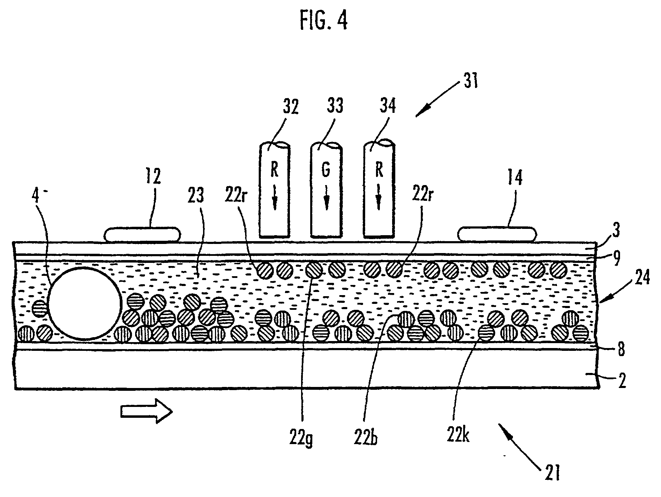

Next, a color image recording medium 21 will be explained, referring to Figs. 4 to 6, as a modified example of the image recording medium 15 shown in Fig. 3.

In the color image recording medium 21, a thermo-hysteresis white muddy supporting medium 23 is provided for supporting dispersed red color particles 22r, green color particles 22g, blue color particles 22b and black color particles 22k. The other features are essentially the same as the image recording medium 1 shown in Fig. 3.

The thermo-hysteresis white muddy supporting medium 23 is a transparent solid at room temperature and becomes a transparent fluid in a molten state above its melting point, and then remains a transparent solid after returning to room temperature. Further, when heated to a whitening temperature usually lower than its melting point, the medium becomes whitened and the white color remains even after being cooled to room temperature.

As such a thermo-hysteresis white muddy supporting medium 23, the following materials have been disclosed, by way of example: In Japanese Laid-Open Patent Publication No. 15419/55 Heisei, organic low molecular weight materials such as high fatty acid, alkanol, alkylamine, alkane, alkine, are dispersed in a matrix material such as polyester, polyvinylchloride, a vinylchloride-vinylacetate copolymer, or a vinylacetate compound-vinylchloride copolymer.

The coloring particles 22r, 22g, 22b and 22k move and/or rotate color-selectively within the heated and fluidized thermo-hysteresis white muddy supporting medium 23, by applied light having a specific wavelength range from infrared to X-ray, respectively, corresponding to each color, or by applying a mechanical vibration of specific frequency corresponding to the respective color, under an applied electromagnetic field. Thereby, a color image is formed or erased.

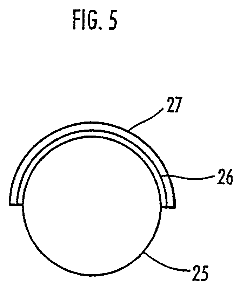

Each of the color coloring balls 22r, 22g, 22b and 22k can be similar to the previously described balls 5 or 16, having a colored half and a white half. However, in order to move color-selectively by irradiation of a specific wavelength light from infrared to X-ray, an arrangement such the construction as shown in Fig. 5 should be employed.

Fig. 5 shows an example of a red ball 22r. The red color ball 22r is made from a similar white material 25 to the previously described balls 5 and 16, and has a photo electromagnetic element 26 covering almost half of its surface and is further covered with a filter 27 for selectively passing red color light only.

For the photo electromagnetic element 26, a photo-voltaic device such as an amorphous silicone photocell may be used. The thickness of the cell is small, i.e. about 1 µm, and is transparent, and therefore the ball presents a color which is the same as the color of the filter.

Accordingly, the red coloring particles or balls 22r are electromagnetically activated by the photo electromagnetic element 26 when irradiated with light within the red wavelength region, and move in response to the applied electromagnetic field inside the heated and fluidized thermo-hysteresis white muddy supporting medium 23.

Also, the green particles 22g must have a filter passing green wavelengths and the blue particles 22b must have a filter passing blue wavelengths. The black particle must have a filter passing infrared wavelengths, but visually presenting a black color, wherein the black particle is activated by infrared light passing through the filter.

Of course, if a principle is employed such that the coloring particles or balls 22r, 22g, 22b and 22k move across the thickness of the recording medium for displaying color, then rotation of the particles or balls is not necessary. Hence, the photo-electromagnetic element 26 and filters can cover the complete surface of the coloring particles or balls. For example, the red coloring particles 22r have their entire surfaces covered with the photo-electromagnetic element 26 and the red-light passing filter, wherein the entire surfaces thereof are electromagnetically activated.

Furthermore, the red coloring particles 22r are made so as to have a week surface potential, namely an inverse potential, for erasing but a strong induced photocell potential for writing when red light is irradiated to overcome such an inverse potential. This technology can improve remarkably the signal to noise (S/N) ratio. The week inverse potential can be obtained by mixing or coating a week conductor resin such as AP300 produced by Mitsui Chemical with the ball material, or by coating a static charge eliminator on the ball.

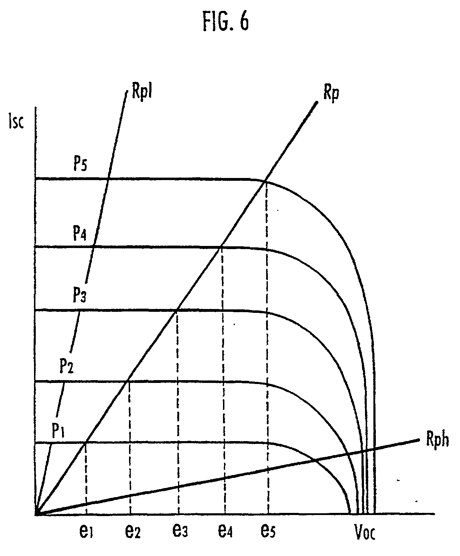

General characteristics of the photo voltaic cell are shown in Fig. 6, where P represents a light strength (P5 > P1), Voc represents a terminal voltage at non-load, and Isc represents a saturated output current at each light strength.

Further, Rp is assigned to represent the external load, including inner leakage resistance, wherein the cell voltage is almost Voc even for a week light strength P1 at a high Rp, and declines to 0 at an extremely week light strength.

Also, when Rp matches with the light strength range under application, the cell voltage e₁ - e₅ can be arranged to be proportional to the light strength P₁ - P₅. If the light strength is reduced below this range, the cell voltage is lowered (< e₁), as shown in Fig. 6

Therefore, when the cell is designed so that its cell voltage is proportional to the light strength, and an external field is applied for a short time period, a color display which operates in an analogue manner is possible, since the movable range of the balls 22r, 22g, 22b and 22k becomes proportional to the photo-induced voltage.

Also, when a photo conductive material is used as the load, Rp becomes Pp1 in strong light and Rph in week light. Then, the cell voltage can be arranged to change in a binary mode.

The aforementioned load resistance can be obtained by adjusting a resistance of the thermo-hysteresis white muddy supporting medium 23 in contact with the balls 22r, 22g, 22b and 22k, or coating the ball surfaces with an appropriate material. In the latter case, a region near the boundary of photo-voltaic region on the ball is preferably made to be insulative or highly resistive.

The image recording medium 21 can be written on or erased by the image recording and erasing apparatus 31 shown in Fig. 4. The apparatus 31 has light fibers 32, 33, and 34 which deliver respective wavelengths of light in place of the electrode 13. The others features are essentially the same as in the apparatus 11. The light fibers 32, 33, and 34 have respective diameters corresponding to an image dot size, and have an electroconductive metal layer on the outer surfaces thereof which functions as both a light irradiator and an electronic field applying stylus.

In the image recording medium 21, the density at which the coloring particles are dispersed in the thermo-hysteresis white muddy supporting medium 23, for each respective color 22r, 22g, 22b and 22k, is such that at least a single layer of color can be formed for each when moved to the surface of the recording medium. The mixing ratio of the respective color particles is preferably adjusted to yield natural colors, but for the simplicity of explanation, they are assumed to be mixed in even parts.

Their distribution can be at random if the color particle size is smaller than an elemental dot size of the image. It is not necessary to distribute specific color balls in a regular pattern such as in a color dot matrix of a liquid crystal display or color CRT, nor is it necessary to pile plural dot pattern sheets of each color with precise positioning. This feature can reduce greatly production costs.

For recording a color image on the recording medium 21, the medium 21 is fed from a position upstream of the recording and erasing apparatus 31 shown in Fig. 4, in the direction of the arrow, and is heated by the electrode 12 so that the thermo-hysteresis white muddy supporting medium 23, which is made from thermofluidizing material, is heated above its melting point and molten into a transparent state. Then, each color particle 22r, 22g, 22b and 22k becomes movable and color selectable by application of colored light.

At this stage, all of the color particles: 22r, 22g, 22b and 22k are activated simultaneously by white light from the surrounding environment, since such white color includes all wavelength ranges specific to each of the color balls, wherein the balls move toward the base sheet side, namely to the bottom of the recording medium within the molten and transparent supporting medium 23.

Next, the medium 23, in a heated, molten and transparent state, proceeds under the light fibers 32, 33 and 34, and an electric field is applied by the conductive electrode (not shown in the figure) provided on the outer surface of each fiber, while simultaneously selected color light is applied through the fibers. Since the medium 23 is still transparent at this stage, the light from the fibers can reach the balls 22r, 22g, 22b and 22k that are positioned on the bottom or base sheet side of the recording layer 24, namely within the supporting medium 23.

Consequently, particles having a color filters matching to the light- colors irradiated from the fibers are activated and are moved by the field applied from the fibers' outer electrodes towards the protective layer 3, and stay there to form color dots making up a desired image.

At an instant shown in Fig.4, the light fibers 32 and 34 are fed with red light and the fiber 33 is fed with green light occasionally. Thus, just under the fibers 32 and 34, the red particles gather on the front surface of the recording layer 24, while just under the fiber 33, green particles gather also on the front surface of the recording layer 24, thereby forming two red and one green color image dots.

Then, the medium 21 proceeds to the whitening stage performed by an non-illustrated heating device, wherein the thermo-hysteresis white muddy supporting medium 23 within the medium 21 is heated to a whitening temperature, and then cooled as a whitened solid. Thus, the balls which have been moved to the protective layer side can be viewed, but the balls left at the bottom of the medium 23 are concealed by the whitened supporting medium 23 and cannot be viewed. The displayed state is frozen finally by solidified medium 23.

The image recording medium 21 is made from the aforesaid materials, and so it is a flexible solid which can maintain the image without degradation or loss, while withstanding bending, folding and wrinkling.

For erasing the image written on the medium 21, the imaged medium 21 is heated by the electrode 12 of the apparatus 31 so that the supporting medium 23 melts and becomes a transparent fluid, whereby the balls of all colors 22r, 22g, 22b and 22k can move within it. When an erasing electric field is applied simultaneously, all of the color balls are photo-electromagnetically activated by respective components of white color light, and are driven by the field toward the bottom of the supporting medium 23.

Then, the medium passes by the light fiber stage without having any light applied thereto, proceeds to the cooling plate 14, and is cooled to room temperature. Thus, all of the particles become fixed at the bottom of the medium 23. Then, the medium is heated to a whitening temperature and again cooled to room temperature while preserving the whitened state, so that the color balls are all concealed at the bottom by the whitened medium, wherein a white erased state is obtained.

Similarly, provided that the coloring particles 5 have respective half colored surfaces 5a coated with photo-electromagnetic effect element 26 and a filter layer to pass specific wavelength light, such as red, green, blue and black identical to their presenting colors, color imaging is made possible by rotating the balls so that the colored and photo activated half is directed upwards, being activated with specific color light and interacted with the applied electric field.

However, in the above rotating ball method, a combination of the red, green, blue and black coloring particles must compose an image element, so a problem may be thought to arise. For example, a red ball displays red but the others remain white and therefore, the composed color will become whitish pink.

On the contrary, however, in the image recording medium 21, just underneath the light fibers 32, 33 and 34, particles of the same color to the fiber guided color, namely 22r, 22b and 22r respectively, gather near to the surface coming from the stored particles in the bottom of the supporting medium 23, and unnecessary white does not mix. For example, the image element generated by fiber 32 guiding red color is composed of 100% red color particles. Therefore, a high purity color image is presented.

In addition, if moving of particles, for example red balls 22r, toward the point under the fiber 32 are accompanied by a stream of nearby and not yet selected color balls, such an accompanying stream of undesired balls can be prevented by providing a weak erasing potential or an inverse potential bias to all of the balls 22r, 22g, 22b and 22k or by providing a combination of weak white light illumination to afford a slight electric activity to all kinds of the balls, and then applying an erasing field by a weakly conductive layer 9 (for example, by a grid structure or high resistant conductive layer). Hence, a high S/N ratio image can be obtained.

Image recording can be performed at the highest speed when light irradiation functions both for color selection and addressing, namely writing, while heating and fluidizing the thermo-hysteresis white muddy supporting medium 23, together with application of a driving field, are preliminary provided. The photovoltaic cell device can be made to have a time constant for keeping the generated charge, in a short exposure of light, to some extent after the exposure thereof, so as to be enough for the balls to move across the thickness of the supporting medium 23. Therefore, the writing speed is not confined by the moving time of the balls, heating time of the medium 23, or the cooling time of the medium 23. Such a time constant may be adjusted by an electric capacity provided between cell terminals and a load including an inner leakage resistance.

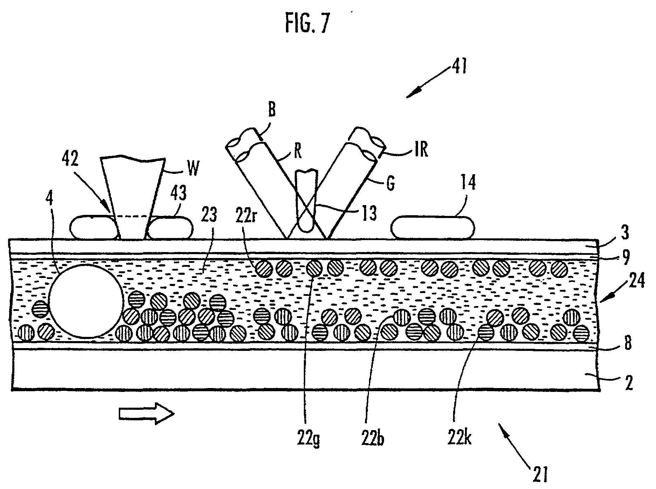

Next, referring to Fig. 7 an image recording-erasing apparatus 41 is explained as a modified example of the aforesaid apparatus 31.

The image recording and erasing apparatus 41 shown in Fig. 7 has an electrode 43, having a slit therein for allowing white light W to pass, and a device (not shown) is provided for illuminating white light W in place of the electrode 12 as a means for heating, erasing and applying a field as shown in Fig. 3. Also, the electrode or stylus 13, serving as an electric field applying means and also as a means to focus light guided by light fibers R, G, B and IR to the spot where the electric field is applied by the stylus, is provided as shown in Fig. 7. The means to generate and control the guided light is not shown in the Fig. 7. Otherwise, the features are essentially the same as in the apparatus 31 shown in Fig. 3. Also, the electrode 13 is the same as the electrode 13 shown in Fig. 2.

The image recording and erasing apparatus 41 can be used for recording and erasing color images on the image recording medium 21.

A process for recording a color image on the image recording medium 21 by the image recording and erasing apparatus 41 shall now be explained.

In a first step, the thermo-hysteresis white muddy supporting medium 23 is heated above its melting point and becomes a transparent fluid. Then, coloring particles 22r, 22g, 22b and 22k become color selectable by light and are movable. An erasing field is also applied by the electrode 43, and white color light is applied through the slit 42 to activate all of color balls which move in response to the field toward the base sheet side, namely to the bottom of the supporting medium 23. Such white color light contains a wavelength range from infrared to the shortest visible spectrum, wherein the white color light generator can be an incandescent lamp, for example.

Secondly, the image-recording medium 21 proceeds under the electrode 13 for applying an electromagnetic field to write an image, wherein the thermo-hysteresis white muddy supporting medium 23, composed of a thermofluidizing material, is heated and molten to attain a transparent fluid state. Under the electrode or stylus 13, red light R, green light G, blue light B and infrared light IR can be irradiated. Such light can be extracted as a specific wave band, respectively, from the white light of the incandescent lamp and be formed as a light flux beam which is guided to the spot by light fibers, and in which each light beam is switched ON or OFF by a device such as a liquid crystal or a mirror switch driven by a piezoelectric means, etc.

Then, the medium 21 under the electrode 13 is composed of the heated and molten transparent supporting medium 23, and any combination of selected color lights is or are irradiated so as to activate the corresponding color particles of 22r, 22g, 22b and 22k so as to come up to spots on the surface. When the electrode or stylus, together with the combining fibers, is traversed across the width while controlling both the field and the light ON or OFF, a color image is written.

Thirdly, the image recording medium 21 proceeds under the cooling plate 14, and the supporting medium 23 is cooled to room temperature. Then, the coloring particles are fixed in the solidified medium 23 and the color image becomes fixed.

The following whitening and erasing processes can be performed in a similar way to the process of the apparatus 31.

As an alternative, a small heating element using a minute current may be used instead of the electrode 13. In this case, the image recording medium 21 is heated by the electrode 43 and then kept slightly cooled for a certain period, or cooled to a certain temperature, by a cooling means (not shown) by contact or air flow, and the medium then proceeds to a region where the thermal head and selected color light(s) are applied together and a dot image is formed by heating a spot in contact with the heating element. Thus, a complete image can be formed.

Another embodiment for electronic color photography shall be explained hereafter.

In place of the electrode 13 and light irradiating means, such as light fibers of red light R, green light G and blue light B for the respective color particles 22 and infrared light IR for black particles, a means for projecting a color photo image together with a means for applying an electric field between the conductive layers 8 and 9 are used. In this case, the medium 21 proceeds to a projection stage while the medium 23 is kept in a heated and fluidized state by the electrode 43, and a writing electric field is applied by the conductive layers 8 and 9.

Then, a color photo image is projected, wherein the coloring particles 22r, 22g, 22b and 22k are respectively activated by the component color lights projected onto them and a color image is formed.

In the above case, plural colors are simultaneously irradiated onto the same image element, so that plural kinds of particles of 22r, 22g, 22b and 22k are driven to the surface of the recording medium 24. However, since the balls are stored in a randomly mixed stack at the bottom of the supporting medium 23, the driven particles are also random in color and in number. Thus, the gathered balls near the surface of the recording medium 24 create a stack of selected color balls, wherein a mixed color can be maintained statistically.

Moreover, the color image can be digitized, similar to the technology of dot gradation printing or dithering, into picture elements of plural color dots having the same color and same depth.

As an alternative to specifying color balls by color light irradiation for the medium 21, in the apparatus 31 of Fig. 4 or the apparatus 41 in Fig. 7, color specification can be performed by imposing a mechanical vibration of a specific frequency together with heating and fluidizing the supporting medium 23 while applying an electromagnetic field thereto.

In the above case, a means for applying mechanical vibration, in addition to the electric field applied by the electrode 13, is provided instead of a light irradiation means of red R, green G, Blue B and infrared IR in the apparatus 41 in Fig. 7, wherein specific color particles or balls are prepared to have their own mechanical vibration resonant frequency, corresponding to its own color and which are different from the others. Such differentiation can be provided by varying the size, weight or apparent density of the particles. A vibration force can be applied by superposing a high frequency electromagnetic field between the aforesaid layers 8 and 9, or by applying a ultrasound to a metal plate laid under the recording medium 21 in contact therewith. Also, the supporting medium 23 for the recording medium 21 and its operating temperature are chosen so as to have a viscosity which allows the particles to hardly move without the vibration but to easily move with the resonant vibration.

In this way, specific color particles among the color particles: 22r, 22g, 22b and 22k, which have a resonant frequency equal to the applied mechanical vibration, can acquire energy to move against the viscosity of the medium 23 in response to the applied electric field. Thus, by specifying the resonant frequency, color particles can be selected to move in said medium 23 toward the surface and be displayed.

In this case, color selection is not performed by a color sensitive photo element and color light activation in response to the applied field, and it is not necessary for the particles 22r, 22g, 22b and 22k to be provided with a photo electromagnetic device. Also, the supporting medium 21 can be a whitened medium 17, similar to the one for the image recording medium 15, instead of a thermo-hysteresis white muddy supporting medium 23.

In the above examples, for positioning an imaging dot, an addressing means such as a traversing electrode or stylus, a thermal element heated by current, and a laser beam, etc., are used. However, of course, X-Y matrix addressing, which is well known in liquid crystals, can be used. In this case, for example, assuming that a length direction of the recording medium is in the X direction, and the width direction is in the Y direction, then the conductive layer 8 may be made of parallel stripes extending in the X direction and the conductive layer 9 may be made of parallel stripes in the Y direction, wherein an address, in which Xi is the ith stripe at sequentially scanning and Yj is the jth stripe at sequentially scanning, determines the address of a dot (i, j), and by applying a field between the Xi and Yj electrodes at an instant, a dot (i, j) is recorded, wherein i and j are integer values indicating a sequential number of stripes. This is essentially the same way as in a liquid crystal display. However, light-activation addressing would be faster.

For Y direction addressing, a simpler way shown as follows can be convenient for certain applications. The electrode 13 can be made of small array of parallel lines, having a height being capable of covering the character height, wherein its resolution is ΔY so as to address a character easily by the position of the array, and its character pattern by the sequential number in the array.

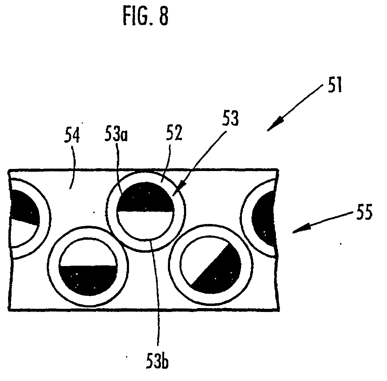

Next, a second embodiment of the present invention shall be explained. In this embodiment, the image recording medium 51, as shown in Fig. 8, is composed of a recording layer 55 having coloring particles or balls covered with a thermofluidizing layer 52, and a transparent film-like fixed medium 54 supporting the same.

The materials comprising the covering layer 52 must have lower melting point than the solid supporting medium 54 and, for example, can be chosen from among paraffin wax, haze wax, bees wax, fish wax, coconut oil, animal fat, ethylene wax, polytetrafluoro wax, calnauba wax, microcrystalline wax, amid stearate, and metallic stearates, etc.

The coloring particles 53 can be the same as the coloring particles 5 of the image recording medium 1 in Fig. 1 and have colored halves such as a black half and a white half.

Also, the solid transparent supporting medium 54 must be solid above the melting point of the thermofluidizing material of the covering medium 52. Such materials are polyvinyl alcohol, methylcelurose, cellurose acetate, acrylic ester, metoxycellurose, carboxymethyl-cellurose, hydroxy ethylcellurose, polyvinylpyrolidone, epoxy resin, elastic epoxy resin, gelatin, casein, acacia gum, starch, polyacrylic soda, styrene-maleic resin copolymer, polystyrene, polyvinyl chloride, linear unsaturated polyester, metacrylate resin, polyurethane, polybutyral, nitrocellurose, ethyle cellurose, acrylate resin, polyester, paraffin wax, polyethylene wax, carnauba wax, maicrocrystaline wax, amid stearate, buthyle rubber, acrylic rubber, nitrile rubber, urethane rubber, modified silicone, elastic cyanoacrylate, unsaturated polyester, melamine, polyester metacrylate, urethane methacrylate, epoxy metacrylate, polyether methacrylate, polyol metacrylate, meramine metacrylate, triazin family metacrylate, nitrocellurose family resins, and cellurose acetate, etc.

The recording layer 55 can be made by a method of mixing together the coloring particles 53 covered with the layer 52 and a solid supporting medium which is preliminarily dissolved with an organic solvent, and then evaporating the solvent. Another method is possible by mixing together the coloring particles 53 covered with the layer 52 with an uncured resin and a curative agent, and then curing the mixture. Another method can be used, by mixing together the coloring particles 53 covered with the layer 52 with an uncured resin, and then curing the mixture by heat, ultraviolet rays, or electron beam, etc.

The image recording medium 51 can have a base sheet, a protective layer, and a conductive layer, but because the supporting medium 54 is solid, spacers are not necessary.

The image recording medium 51 can be recorded on or erased by using the apparatus 11 in Fig. 2 in the same way as the image recording medium 1 in Fig. 1. The image recording medium 51 is fed from upstream of the apparatus 11 in the direction shown by the arrow, and the covering layer 52 is heated by the electrode 12 to a temperature above its melting point but below the melting point of the solid supporting medium 54, and thereby is fluidized so that the coloring particles 53 can rotate in the molten covering layer 52.

An erasing electromagnetic field is applied to the medium 51, whereby the coloring particles or balls are driven to rotate so that the white half comes upward and an erased state is obtained.

Next, the image recording medium 51 proceeds under the electrode 13 while the covering layer of thermofluidizing material is in a molten state, and a writing field is impressed thereon by the electrode 13. Then, the coloring balls 53 are driven to rotate so that the colored half 53a comes upward and a written state is obtained for displaying certain desired characters, symbols and graphs by the colored half 53a.

Next, the image recording medium 51 proceeds under the cooling plate 14 and the covering layer 52 of thermofluidizing material is cooled to room temperature. Consequently, the covering layer becomes solid with the balls being fixed therein with either their colored half or their white half being upwardly oriented, depending on the writing or the erasing field applied thereto, and the imaged state is maintained.

The image recording medium 51 is flexible as the aforesaid material is used, so that the image is not degraded or lost even by bending or folding etc.

The image recording medium 51 can be recorded or erased in essentially the same way as the case of the image recording medium 1 in Fig. 1, except that the coloring balls are rotated or fixed in the covering layer 52 of the thermofluidizing material.

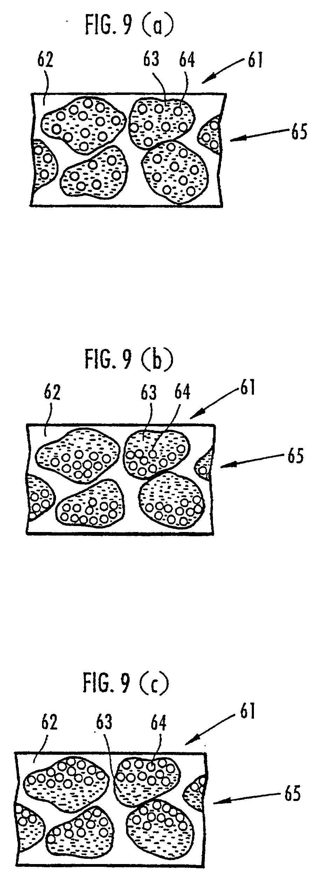

Next, referring to Figs. 9(a) to 9(c), an image recording medium 61 shall be explained as a modified example of the medium 51 shown in Fig. 8.

The image recording medium 61 is made of a film-like recording layer 65, having many dispersed thermofluidizing units 63 therein which again have coloring particles 64 dispersed therein, within the transparent solid supporting medium 62 which is of the same material as the solid supporting medium 54 of the image recording medium 51.

The thermofluidizing units 63 are made from the same material as the whitening supporting medium 17 of the image recording medium 15 shown in Fig. 3. Also, the coloring particles 64 are made from the same material as the coloring particles 53 of the medium 51, or the coloring particles 16 of the medium 15 shown in Fig. 3, and also have the same construction although their diameters are smaller than that of the particles 53 or16.

The thermofluidizing units 63 need not necessarily be spherical like a ball, but it is sufficient if the coloring particles are dispersed inside and room is allowed for permitting their movement.

The image recording medium 61 can be recorded on or erased by the apparatus 11 of Fig. 3, in the same manner as for the medium 15 shown in Fig. 3. The image recording medium 61 is fed from upstream of the image recording and erasing apparatus 11 in the direction of the arrow. The thermofluidizing units 63 are heated by the electrode 12 above the melting point thereof and fluidized. Thus, the coloring particles 64 can move inside the thermofluidizing units 63.

Then, an erasing field is applied on the image recording medium 61, also under the electrode 12, so that the coloring particles move toward the base sheet side (i.e., the non-viewable or bottom side in Fig. 9(b)) inside of the thermofluidizing units 63 due to the interaction of the zeta potential with the applied field. Since the material 63 is the same as the whitening supporting medium 17, the coloring particles which are moved to the bottom of the unit 63 cannot be seen from the protective layer side (i.e., the observing side) and are concealed inside the whitening medium of the unit 63. Namely, an erased state is obtained.

Next, the medium 61 proceeds under the electrode 13, wherein the unit 63 is heated and fluidized and then a writing field is applied. Consequently, the coloring particles 64 are moved toward the viewable side (i.e., the protective layer or upper side in Fig. 9(c)) due to interaction of said zeta potential with the applied field of the electrode 13. Thus, an image such as characters, symbols, and graphs may be displayed or written by the colored part of the aforesaid particles 64.

Next, the medium 61 proceeds under the cooling plate 14 and is cooled to room temperature. Then, the thermofluidizing units 63 become solid, having the coloring particles 64 frozen or fixed in either state, i.e., being upwards and viewable or toward the bottom and non-viewable, and the image is maintained at room temperature.

The image recording medium 61 is flexible, since it is made from the aforesaid materials, and the image is never degraded or lost even due to folding or wrinkling.

The image recording medium 61 can be erased in the same manner as the medium 15 in Fig. 3, except that the coloring particles are moved in a heated and molten state, or become fixed, inside the unit 63.

Furthermore, the coloring particles 64 can be of mixed red, green, blue and black particles, and the thermofluidizing material can be the same as the aforesaid thermo-hysteresis white muddy supporting medium 23.

The image recording medium 61 can be erased with the apparatus 41 shown in Fig. 7 in the same manner as for the medium 21 in Fig. 7, except that the coloring particles are moved in a heated and molten state, or become fixed, inside the unit 63.

Next, a third embodiment of the invention shall be explained. The image recording medium 15 of this embodiment has the same composition and structure as the medium 15 shown in Fig. 3, except that the whitening supporting medium is liquid at room temperature. Therefore, an explanation is given by taking the image recording medium 15 of this embodiment as the medium 15 shown in Fig. 3.

In this embodiment, for the image recording medium 15, the whitening supporting medium 17 can be one composed of a liquid at room temperature, such as organic solvent, in which opaque particles reflecting white color, or particles for scattering white color, are dispersed therein. Both of such particles are not shown in the figure, but are smaller in diameter than the coloring particles16. The organic solvent can be one such as used in the previously disclosed electrophoresis display devices. Examples are hexylbenzene, isoparaffine family hydrocarbon, tetrafluorodibromoethane, perfluoropolyether, and toluenetrifluoride, etc.

The opaque particles for reflecting white color can be fine particles such as TiO2, ZnO, CaCO3, and the particles scattering white color can be fine particles such as resins of high refractivity for plastic lenses, and acryl resins, etc.

The image recording medium 15 of this embodiment has coloring particles 16 therein which move toward the protective layer 3 side in the recording medium 18 by applying an electric field using a conventional electrophoresis display apparatus. As a result, the coloring particles located at the protective layer side can be viewed, and an image such as characters, symbols and graphs are displayed, or namely, written. Also, the particles located at the bottom of recording medium 18 or base sheet side are concealed by the whitened supporting medium 17 and cannot be viewed. Thus, the displayed particles 16 located at the protective layer 3 side can be viewed more clearly

Next, a forth embodiment of the invention shall be explained.

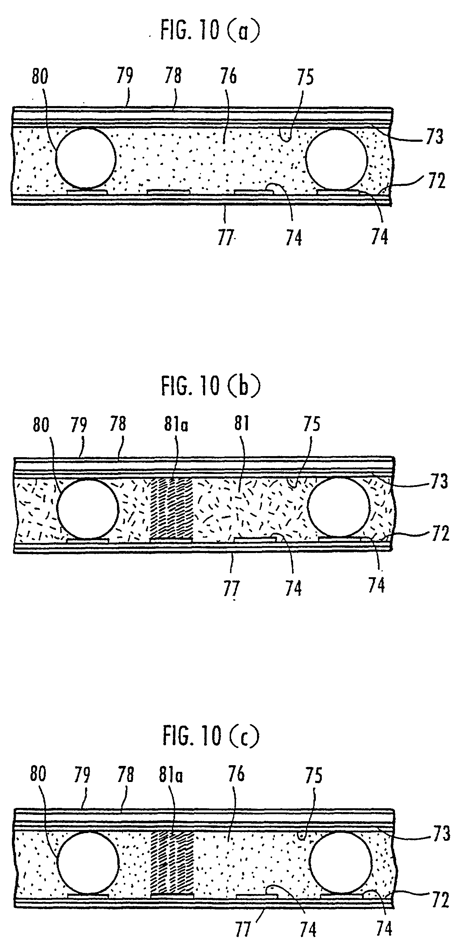

The image recording medium 71 according to this embodiment, as shown in Fig. 10(a), is composed of transparent base plates 72 and 73, mutually facing each other at a specific distance, and strip-like transparent electrodes are provided at the inner surface of the base plates, respectively perpendicular to each other (one 74 in the lateral direction and another 75 in the longitudinal direction), wherein a thermotropic liquid crystal 76 is sealed between the base plates. At the lower side of the base plate 72, a light reflecting layer 77.is provided, and a light polarization plate 78 is provided over the base plate 73, and a protective layer 79 is provided again over the plate 78. Between both base plates, some spacers 80 are distributed.

The thermotropic liquid crystal 76 is solid at room temperature but becomes liquid when heated above a certain temperature, and functions as liquid crystal. An example of this material is cholesteril benzoate. In the image recording medium 71 of this embodiment, all of the composing elements, except for the thermotropic liquid crystal 76, can be the same as in a conventional liquid crystal display.

The thermotropic liquid crystal 76 in the image recording medium 71 of this embodiment attains a liquid state when heated above a certain temperature and becomes a fluidic thermotropic liquid crystal 81. When an electric field is applied at a certain crossing point of the mutually perpendicular electrodes, liquid crystal molecules of 81 which are underneath the crossing point are oriented and become oriented thermotropic liquid crystals 81a. When this part is illuminated over the light polarizing plate 78, light penetrates the oriented crystal 78, being polarized to the reflecting plate and reflected back to the light polarizing plate 78, whereby the light polarizing plate 78 stops the passing of differently polarized light by the oriented crystal 78 and forms a black dot, namely an image, while leaving the other part thereof white. Thus, an image such as characters, symbols and graphs, can be displayed.

Next, the imaged medium 71 can be frozen, as displayed, leaving the other part thereof white when cooled rapidly to room temperature, without any time being allowed for rearrangement of the molecules (preferably the field should be applied), and they remain displayed even when the electric field is removed.

In the image recording medium 71, the base plates 72 and 73, the reflecting plate 77, and the polarizing plate 78 can be made from elastic materials. Further, the transparent electrodes 74 and 75 and the protective layer 79 are formed thinner than the base plates 72 and 73, the reflecting plate 77, and the polarizing plate 78, so that their elasticity is secured. Accordingly, the image recording medium 71 can be bent or folded while an image is displayed, without the image becoming degraded or lost.

For erasing the image, the image recording medium 71 is heated above the aforesaid temperature without applying an electric field. Then, the oriented thermotropic liquid crystal 81a becomes liquid without an applied field and loses its orientation to attain a non-oriented liquid crystal 81. When cooled again to room temperature, the medium 71 becomes a solid thermotropic liquid crystal 76, in which the image is erased.

Next, a fifth embodiment of the present invention shall be explained.

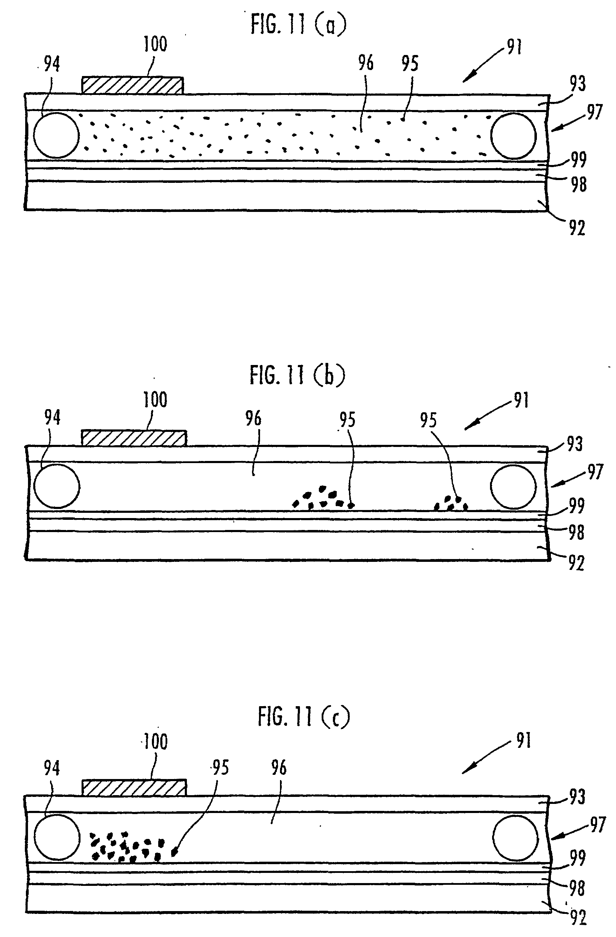

The image recording medium 91 of this embodiment, as shown in Fig. 11, is composed of a base sheet 92 and a transparent protective layer 93, mutually facing each other, and having spacers 94 interposed therebetween, a film-like recording layer 97 composed of coloring particles, and a supporting medium 96 having the particles dispersed therein. The base sheet 92 has a magnetic layer 98 and a colored layer 99 providing a background color on the recording layer side, in the sequence described herein. Also, a shielding plate 100 for keeping the erased particles concealed, is provided on a part of the protective layer 93.

The base sheet 92 and the protective layer 93, respectively, are the same as the base sheet 2 and the protective layer 3 shown in Fig. 1.

The coloring particles can be particles which are easily magnetized following an applied magnetic field and easily de-magnetized essentially when the magnetic field is removed. Examples of such materials are soft ferrite or pure iron.

The supporting medium 96 of the thermofluidizing material is solid at room temperature and becomes liquid above a certain temperature. The same materials as the supporting medium 17 of the image recording medium 1 shown in Fig. 1 can be used, due to their low viscosity when in a heated and molten state. Examples are paraffin wax, haze wax, bees wax, fish wax, coconut oil, animal fat, ethylene wax, polytetrafluoro wax, calnauba wax, microcrystalline wax, amid stearate, and metallic stearates.

The recording layer 97 can be made by mixing the coloring particles with the molten supporting medium and cooling them to become solid, or by mixing the coloring particles with a solution of the medium 96 in a solvent and later removing the solvent.

The magnetic layer 98 is a layer having ferrite powders therein and can be made from materials widely used in manufacturing magnetic tape, magnetic cards, magnetic discs, etc.

The colored layer 99 functions to form a background color and can be a sheet or film of plastic which is colored differently from the coloring particles.

The shielding part 100 can be made of any opaque material, for example from the same material as the base sheet 92, so long as it is enough to conceal the erased particles under the shield.

For recording an image on the medium 91, the medium is heated above the aforesaid temperature to bring the supporting medium 96 into a fluidic state, whereby the coloring particles become movable. Next, a magnetic field is applied and scanned along the protective layer 93 by a means such as the magnetic head, etc. Thus, a magnetized pattern is recorded on the magnetic layer 98 and the coloring particles 95 are magnetically attracted to the pattern. Then, the magnetized coloring particles 95 move to attach themselves to the magnetized pattern on the magnetic layer 98, and an image of coloring particles, such as characters, symbols and graphs, is formed on the colored background 99.

Then, the image recording medium 91 is cooled to room temperature so that the supporting medium 96 becomes solid and freezes the displayed particles in position as displayed.

The image recording medium 91 is flexible and is made from the aforesaid materials. Accordingly, the image recording medium 91 can be bent or folded while it is displayed, without the image being degraded or lost.

For erasing the image, the image pattern on the magnetic layer 98 is first erased, and then the medium 91 is again heated so that the supporting medium 96 becomes fluidic and the particles 96 can move therein. Next, by sliding the magnetic head along the protective layer 93, the magnetic layer underneath the shielding part 100 becomes magnetized so that the particles are attracted to the part 100 and are concealed underneath the shield part. The particles loose their magnetism if the magnetic field is removed, and so can follow a new magnetic pattern of the magnetic layer 98.

In this way, the coloring particles following the new pattern move under the shielding part and are concealed from the view field. Then, the image recording medium 91 is cooled below a certain temperature, or to room temperature, and becomes solid and freezes the written image as erased.

### INDUSTRIAL APPLICABILITY

This invention can be utilized for recording mass quantities of information, for example, in applications such as electronic newspapers in the digital broadcasting era. A wide imaging area with fine resolution can provide free reading in forms such as "outline at a glance" or as "details of a focused part."

The recording medium can be erased and reused repeatedly after being read.

## Claims

1. An image recording medium, comprising:
a base sheet;
a transparent protecting layer facing said base sheet at a specific distance;
a film-like recording layer sealed between said base sheet and said protecting layer and having coloring particles rotatable and/or movable in response to an applied electromagnetic field, and a supporting medium dispersing said coloring particles,
functioning for forming or writing a viewable image by rotating and/or moving said coloring particles in said supporting medium by a first applied electromagnetic field, and
further functioning for erasing said viewable image by rotating and/or moving said coloring particles in said supporting medium by a second applied electromagnetic field,
wherein said supporting medium comprises a thermofluidizing medium which is substantially non-fluid at room temperature and fluidized when heated above a predetermined temperature, and said medium is functioning for forming or writing a viewable image by rotating and/or moving said coloring particles in said supporting medium which is heated and fluidized above a certain temperature by said first applied electromagnetic field, and further functioning for erasing said viewable image by rotating and/or moving said coloring particles in said supporting medium which is the heated and fluidized above a certain temperature by said second applied electromagnetic field.

2. The image recording medium according to claim 1,
wherein said thermofluidizing medium comprises a transparent mother material and has dispersed particles therein which are smaller than said coloring particles, said dispersed particles are opaque or transparent but reflecting and/or scattering white light, such that said coloring particles can be viewed when brought near to a view side surface, but said coloring particles which are deeper from the surface by about a length equal to a diameter of said coloring particles cannot be viewed and so are concealed under said reflecting and/or scattering white light.

3. The image recording medium according to claim 1,
wherein said coloring particles are provided with a photo-electromagnetic part, and are activated by a predetermined range of light having a wavelength of from infrared to X-ray.

4. The image recording medium according to claim 3,
wherein said coloring particles comprise particles of plural different color types which are respectively different from each other, such that a specific color type can be activated by only a specific wavelength range of light between infrared and X-ray different from the other types.

5. The image recording medium according to claim 3,
wherein said coloring particles comprise a color filter allowing a specified wavelength range of light to pass depending on its own presenting color, and which is different from the other particles presenting other colors.

6. The image recording medium according to claim 4,
wherein said coloring particles comprise particles of plural different color types, and said thermofluidizing medium is solid at room temperature, having a whitening temperature below its melting point, becoming a whitened solid after being elevated to said whitening temperature and cooled to room temperature, and becoming a transparent solid after being elevated above its melting point and being cooled to room temperature.

7. The image recording medium according to claim 1,
wherein said thermofluidizing material has a viscosity which does not allow said coloring particles to move in a fluidic state under application of said electromagnetic field only, but allows said coloring particles to move when vibration is applied together with said electromagnetic field in the fluidic state, and wherein the frequency of the applied vibration is a resonant mechanical vibration frequency of said coloring particles.

8. The image recording medium according to claim 7,
wherein said coloring particles comprise particles of plural different color types, and having respective resonant vibration frequencies depending on its presenting color which are different from the other color types.

9. An image recording medium, comprising:
a film-like image recording layer comprising coloring particles therein which rotate and/or move responding to an applied electromagnetic field, and a supporting medium dispersing said coloring particles, having a viewable image written by said coloring particles when said coloring particles are rotated and/or moved by a first external first electromagnetic field, and having said image erased by said coloring particles when said coloring particles are rotated and/or moved by an external second electromagnetic field,
wherein said supporting medium comprises a transparent film-like solid having thermofluidizing material units dispersed therein which are substantially non-fluid at room temperature and fluidized above a predetermined temperature which is below the melting point of said supporting medium and said coloring particles,
wherein said image is written by causing said coloring particles to be rotated and/or moved by the externally applied first electromagnetic field within said thermofluidizing units which are heated above said predetermined temperature, but below the melting point of said supporting medium, and wherein said image is maintained by fixing said coloring particles and cooling said thermofluidizing units below a predetermined temperature into a substantially non-fluid state, and
wherein said image is erased by causing said coloring particles to be rotated and/or moved by the externally applied second electromagnetic field within said thermofluidizing units which are heated above said predetermined temperature, but below the melting point of said supporting medium, and wherein said erased image is maintained by cooling said thermofluidizing units below a predetermined temperature into a substantially solid state.

10. The image recording medium according to claim 9,
wherein said thermofluidizing units are composed of a thermofluidizing medium which comprises a transparent mother material and has dispersed particles therein which are smaller than said coloring particles, and said dispersed particles are opaque or transparent but reflecting and/or scattering white light, such that said coloring particles can be viewed when brought near to a view side surface of said units, but said coloring particles which are deeper from the surface by about a length equal to a diameter of said coloring particles cannot be viewed and so are concealed under said reflecting and/or scattering white light.

11. The image recording medium according to claim 9,
wherein said coloring particles are provided with a photo-electromagnetic part, and are activated by a predetermined range of light having a wavelength of from infrared to X-ray.

12. The image recording medium according to claim 11,
wherein said coloring particles comprise particles of plural different color types which are respectively different from each other, such that a specific color type can be activated by only a specific wavelength range of light between infrared and X-ray different from the other types.

13. The image recording medium according to claim 12,
wherein said coloring particles comprise a color filter allowing a specified wavelength range of light to pass depending on its own presenting color, and which is different from the other particles presenting other colors.

14. The image recording medium according to claim 12,
wherein said coloring particles comprise particles of plural different color types, and said thermofluidizing medium is solid at room temperature, having a whitening temperature below its melting point, becoming a whitened solid after being elevated to said whitening temperature and cooled to room temperature, and becoming a transparent solid after being elevated above its melting point and being cooled to room temperature.

15. The image recording medium according to claim 9,
wherein said thermofluidizing material has a viscosity which does not allow said coloring particles to move in a fluidic state under application of said electromagnetic field only, but allows said coloring particles to move when vibration is applied together with said electromagnetic field in the fluidic state, and wherein the frequency of the applied vibration is a resonant mechanical vibration frequency of said coloring particles.

16. The image recording medium according to claim 15,
wherein said coloring particles comprise particles of plural different color types, and having respective resonant vibration frequencies depending on its presenting color which are different from the other color types.

17. An image recording medium, comprising:
a base sheet;
a transparent protecting layer facing said base sheet at a specific distance;
a recording layer sealed between said base sheet and said protecting layer and having coloring particles rotatable and/or movable responding to an applied electromagnetic field, and a supporting medium dispersing said coloring particles,
functioning for forming or writing a viewable image by rotating and/or moving said coloring particles by a first applied electromagnetic field, and
further functioning for erasing said viewable image by rotating and/or moving said coloring particles by a second applied electromagnetic field,
wherein said supporting medium comprises a transparent mother material and has dispersed particles therein which are smaller than said coloring particles, and said dispersed particles are opaque or transparent but reflecting and/or scattering white light, such that said coloring particles can be viewed when brought near to a view side surface, but said coloring particles which are deeper from the surface by about a length equal to a diameter of said coloring particles cannot be viewed and so are concealed under said reflecting and/or scattering white light

18. The image recording medium according to claim 17,
wherein said coloring particles are provided with a photo-electromagnetic part, and are activated by a predetermined range of light having a wavelength of from infrared to X-ray.

19. The image recording medium according to claim 18,
wherein said coloring particles comprise particles of plural different color types which are respectively different from each other, such that a specific color type can be activated by only a specific wavelength range of light between infrared and X-ray.

20. The image recording medium according to claim 19,
wherein said coloring particles comprise a color filter allowing a specified wavelength range of light to pass depending on its own presenting color, and which is different from the other particles presenting other colors.

21. The image recording medium according to claim 17,
wherein said supporting medium has a viscosity which does not allow said coloring particles to move in a fluidic state under application of said electromagnetic field only, but allows said coloring particles to move when vibration is applied together with said electromagnetic field in the fluidic state, and wherein the frequency of the applied vibration is a resonant mechanical vibration frequency of said coloring particles.

22. The image recording medium according to claim 21,
wherein said coloring particles comprise particles of plural different color types, and having respective resonant vibration frequencies depending on its presenting color which are different from the other color types.

23. An image recording medium, comprising:
a base sheet;
a photo-polarizing plate facing said base sheet at specific distance;
a film-like recording layer sealed between said base sheet and said photo polarizing plate, and having coloring particles therein which become oriented in response to an applied electromagnetic field, and a bulk liquid crystal as supporting medium,
thereby functioning for forming or writing a viewable image through said photo-polarizing plate and for erasing said viewable image by releasing said orientation upon removal of said electromagnetic field,
wherein both said coloring particles and said supporting medium are made of a thermotropic liquid crystal, which becomes solid substantially at room temperature and liquefied at an elevated temperature above a predetermined temperature, thereby functioning as a liquid crystal such that the molecules thereof, under an applied electric field, are oriented to form an image dot viewable through said polarizing plate, said image being written and said supporting medium being congealed in a solid state as said image is displayed by cooling below said temperature, and said image being erased by removing said electrical field and releasing said orientation of said liquid crystal while said supporting medium is heated and fluidized at a temperature above said predetermined temperature.

24. An image recording medium, comprising:
a sheet-like magnetic layer;
a transparent protecting layer facing said magnetic layer at a specific distance;
a film-like recording layer being sealed between said magnetic layer and said protecting layer, and comprising coloring particles which are easily magnetized in the presence of an applied magnetic field, and are easily demagnetized upon removal of the magnetic field, and which move in response to said applied magnetic field,
thereby functioning for forming or writing a viewable image by magnetizing said magnetic layer and moving said coloring particles within said recording layer by applying a first electromagnetic field, and erasing said image by moving said coloring particles away from a view field within a supporting medium that is heated and fluidized above a predetermined temperature by applying a second electromagnetic field to re-magnetize said magnetic layer in an erased pattern,
wherein said supporting medium comprises a thermofluidizing material which is substantially non-fluid at room temperature and fluidized above said predetermined temperature,
wherein said image is written by moving said coloring particles following a magnetized field pattern of said magnetic layer within said heated and fluidized supporting medium upon applying an external first electromagnetic field, and freezing said image when said supporting medium is cooled to room temperature, and
wherein said image is erased by moving said coloring particles following a magnetized field pattern of said magnetic layer within said heated and fluidized supporting medium upon applying an external second electromagnetic field.

25. An image recording and erasing apparatus for writing or erasing an image on an image recording medium,
said image recording medium comprising:
one of a base sheet and a magnetic layer;
one of a transparent protecting layer and a photo-polarizing plate facing said base sheet or said magnetic layer at specific distance;
a film-like recording layer sealed between said transparent protecting layer or a photo polarizing plate and said base sheet or said magnetic layer, said recording layer being composed of coloring particles which are oriented, rotated and/or moved in response to an applied electromagnetic field, and a supporting medium having said coloring particles dispersed therein, wherein said supporting medium comprises a thermofluidizing material being substantially solid at room temperature and fluidized above a predetermined temperature,
said image recording and erasing apparatus comprising:
means for heating said supporting medium above said predetermined temperature;
means for applying an electromagnetic field to write or erase an image by causing said coloring particles to become oriented, rotated and/or moved within said supporting medium in response to said electromagnetic field; and
means for cooling said recording medium to congeal said coloring particles in a written or an erased state.

26. The image recording and erasing apparatus according to claim 25, wherein said coloring particles have a photo-electromagnetic part and are activated by a predetermined range of light having a wavelength of from infrared to X-ray, and further comprising means for irradiating light to said coloring particles to activate said photo-electromagnetic part.

27. The image recording and erasing apparatus according to claim 25, comprising means for applying vibration, wherein said thermofluidizing medium has a viscosity which does not allow said coloring particles to move in a fluidic state under application of said electromagnetic field only, but allows said coloring particles to move when vibration is applied together with said electromagnetic field in the fluidic state, and
wherein the frequency of the applied vibration is a resonant mechanical vibration frequency of said coloring particles.

28. An image recording and erasing apparatus for recording or erasing an image on a recording medium,
said recording medium comprising:
a film-like image recording layer comprising coloring particles which rotate and/or move in response to an applied electromagnetic field, and a transparent solid supporting medium having thermofluidizing material units dispersed therein which are substantially non-fluid at room temperature and which become fluidized above a predetermined temperature below the melting point of said supporting medium and said coloring particles;
said image recording and erasing apparatus comprising:
means for heating said image recording medium above said predetermined temperature and below the melting point of said supporting medium;
means for applying said electromagnetic field to rotate and/or move said coloring particles in said thermofluidizing units so as to write or erase said image; and
means for cooling said image recording medium below said predetermined temperature for congealing said coloring particles in a written or erased state.

29. The image recording and erasing apparatus according to claim 28, wherein said coloring particles have a photo-electromagnetic part and are activated by a predetermined range of light having a wavelength of from infrared to X-ray, and further comprising means for irradiating light to said coloring particles to activate said photo-electromagnetic part.

30. The image recording and erasing apparatus according to claim 28, wherein said thermofluidizing medium has a viscosity which does not allow said coloring particles to move in a fluidic state under application of said electromagnetic field only, but allows said coloring particles to move when vibration is applied together with said electromagnetic field in the fluidic state, and
wherein the frequency of the applied vibration is a resonant mechanical vibration frequency of said coloring particles.

31. An image recording method for recording an image on a recording medium, comprising the steps of:
providing a recording medium, said recording medium comprising:
a base sheet;
a transparent protecting layer facing said base sheet at a specific distance; and
a film-like recording layer sealed between said base sheet and said protecting layer, having coloring particles rotatable and/or movable therein in response to an applied electromagnetic field, and a supporting medium in which said coloring particles are dispersed, wherein the supporting medium comprises a thermofluidizing material being substantially non-fluid at room temperature and fluidized above a predetermined temperature, and wherein said coloring particles comprise a photo-electromagnetic active part sensitive to light of a certain wavelength of from infrared to X-ray; and
forming said image by addressing an image dot position with one of heating, application of an electromagnetic field and light irradiation, while the other two are previously applied over wider region around the dot.

32. An image recording method for recording a color image on a recording medium, comprising the steps of:
providing a recording medium, said recording medium comprising:
a base sheet;
a transparent protecting layer facing said base sheet at a specific distance; and
a film-like recording layer sealed between said base sheet and said protecting layer, having coloring particles rotatable and/or movable therein in response to an applied electromagnetic field, and a supporting medium in which said coloring particles are dispersed, wherein the supporting medium comprises a thermofluidizing material being substantially non-fluid at room temperature and fluidized above a predetermined temperature, and wherein said coloring particles comprise a photo-electromagnetic active part sensitive to light of a certain wavelength of from infrared to X-ray,
wherein said coloring particles comprise particles of plural different color types which are respectively different from each other, such that a specific color type can be activated by only a specific wavelength range of light between infrared and X-ray different from the other types;
preliminarily heating said recording medium with a heating means;
applying an electromagnetic field with an electromagnetic field applying means to a certain region of interest of said recording medium; and
projecting an image to be recorded onto said region of interest.

33. An image recording method to record an image on a recording medium, comprising the steps of:
providing a film-like recording medium, comprising:
coloring particles which rotate and/or move in response to an applied electromagnetic field;
a transparent and solid supporting medium having thermofluidizing units dispersed therein which are non-fluid at room temperature and which become in a fluid state above a predetermined temperature below a melting temperature of said supporting medium, wherein said coloring particles are dispersed in said thermofluidizing units and include a photo-electromagnetic active part sensitive to a certain wavelength range of from infrared to X-ray; and
addressing an image dot position by preliminary applying two of heating, an electromagnetic field and light irradiation; and
applying a remaining one of heating, an electromagnetic field or light irradiation to a region of interest of said recording medium.

34. An image recording method to record a color image on a recording medium, comprising the steps of:
providing a recording medium comprising:
a film-like recording layer having coloring particles rotatable and/or movable therein in response to an applied electromagnetic field, and a transparent and solid supporting medium in which thermofluidizing units are dispersed being substantially non-fluid at room temperature and fluidized above a predetermined temperature, wherein said coloring particles comprise a photo-electromagnetic active part sensitive to light of a certain wavelength range of from infrared to X-ray,
wherein said coloring particles comprise particles of plural different color types which are respectively different from each other, and being activated by a similar wavelength range of light depending on their presenting colors;
preliminarily applying heating with a heating means, and an electromagnetic field with an electromagnetic field applying means, to a certain region of interest of said recording medium; and
projecting an image to be recorded to said region of interest with a light irradiation means.
